# EUROPÄISCHE PATENTSCHRIFT

(11) **EP 4 328 612 B1**
(45) Veröffentlichungstag und Bekanntmachung des Hinweises auf die Patenterteilung: **14.08.2024**
(21) Anmeldenummer: 22192372.5
(22) Anmeldetag: 26.08.2022
(51) Int. Cl.: G01S 5/02, G01S 5/14, G01S 5/06

(54) **VERFAHREN ZUM BETRIEB EINES FUNKORTUNGSSYSTEMS, FUNKORTUNGSSYSTEM UND TRANSPONDER**
METHOD FOR OPERATING A RADIO POSITIONING SYSTEM, RADIO POSITIONING SYSTEM AND TRANSPONDER
PROCÉDÉ DE FONCTIONNEMENT D'UN SYSTÈME DE LOCALISATION RADIO, SYSTÈME DE LOCALISATION RADIO ET TRANSPONDEUR

(43) Veröffentlichungstag der Anmeldung: 28.02.2024
(73) Patentinhaber: Siemens Aktiengesellschaft, 80333 München (DE)
(72) Erfinder: Schmidt, Olga, 09337 Hohenstein - Ernstthal (DE)
(74) Vertreter: Siemens Patent Attorneys

(56) Entgegenhaltungen:
- EP-B1- 2 138 861
- KR-A- 20180 070 861
- US-A1- 2014 362 120

## Beschreibung

Die vorliegende Erfindung betrifft ein Verfahren zum Betrieb eines Funkortungssystems sowie ein Funkortungssystem und einen Transponder zur Durchführung des Verfahrens.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

EP 3 599 573 B1 betrifft ein Verfahren zur Datenübermittlung zwischen einem Funk-Transponder-Lesegerät und einem Funk-Transponder, bei dem eine Steuerungseinheit des Funk-Transponders zur Erzeugung eines Antwortsignals eine Veränderung einer Lastimpedanz durch ein Steuerungssignal steuert, das eine ausgewählte Schaltimpulsfrequenz und eine ausgewählte Schaltimpulsanzahl aufweist. Die Steuerungseinheit codiert mehrwertige zumindest ternäre Symbole in das Steuerungssignal. Symbolwerte werden jeweils zu Schaltimpulsfolgen zugeordnet, die jeweils eine eindeutige Kombination aus Schaltimpulsfrequenz, Schaltimpulszahl und Phasenverschiebung aufweisen. Dabei werden nur Kombinationen ausgewählt, deren Quotient aus Schaltimpulszahl und Schaltimpulsfrequenz innerhalb eines vorgegebenen Wertbereichs liegt.

Aus WO 2022/002503 A1 ist ein Funkortungssystem bekannt, bei dem eine Position eines Transponders mittels mehrerer Basisstationen des Funkortungssystems anhand von Funksignal-Empfangszeitdifferenzen in einem ersten Betriebsmodus oder anhand von Funksignal-Laufzeiten in einem zweiten Betriebsmodus ermittelt wird. Zur Ermittlung seiner Position sendet der Transponder per Broadcast eine Nachricht an die Basisstationen. Die Nachricht empfangende Basisstationen ermitteln jeweils eine Empfangssignalstärke eines zur Übermittlung der Nachricht verwendeten Transpondersignals. Eine Auswertevorrichtung ermittelt eine Anzahl der Basisstationen, die das Transpondersignal mit einer über einer vorgegebenen Mindestsignalstärke liegenden Empfangssignalstärke empfangen haben und versetzt die Basisstationen dementsprechend in den ersten oder in den zweiten Betriebsmodus.

KR20180070861A betrifft ein Positionsinformationsterminal, das einen Halter, auf dem mindestens ein elektronisches Regaletikett angeordnet ist, sowie eine erste auf dem Halter angeordnete Kommunikationseinheit umfasst, die Identifikationsinformationen von mindestens einem elektronischen Regaletikett empfängt. Außerdem ist eine Steuerungseinheit zur Erzeugung von Positionsinformationen für das Positionsinformationsterminal vorgesehen. Eine zweite Kommunikationseinheit sendet die Identifikationsinformationen und die Positionsinformationen an ein Gateway. Die zweite Kommunikationseinheit kann beispielsweise in der Halterung oder an einer Oberfläche der Halterung angeordnet sein. Daher kann mindestens ein Gateway oder mindestens ein Server die Identifikationsinformationen von dem elektronischen Regaletikett automatisch empfangen und die Identifikationsinformationen von mindestens einem elektronischen Regaletikett registrieren.

Transponder von Funkortungssystemen werden insbesondere jeweils an zu ortenden Objekten, wie Werkstücken, Robotern oder Fahrzeugen, angebracht und senden in definierten Zeitabständen Ortungssignale aus. Darüber hinaus können Transponder e-Ink- oder e-Paper-Displays umfassen, auf denen positions-, objekt- oder prozesszustandsabhängige Informationen für Menschen bzw. Maschinen lesbar angezeigt werden. Beispielsweise kann hiermit eine zuverlässige und effiziente Karosserieverfolgung und -bearbeitung innerhalb einer Automobilfertigungslinie realisiert werden. Da Fahrzeugkarosserien üblicherweise zu großen Anteilen aus Metall bestehen, sollten Transponder nur an geeigneten Stellen einer Fahrzeugkarosserie angeordnet werden, um Funksignalabschwächungen so gering wie möglich zu halten. Andererseits sollte das e-Ink- oder e-Paper-Display eines entsprechend ausgestatteten Transponders insbesondere durch in einer Fertigungslinie tätige Personen stets gut ablesbar sein.

Der vorliegenden Erfindung liegt daher die Aufgabe zugrunde, ein Verfahren zum Betrieb eines Funkortungssystems zu schaffen, das eine hinsichtlich einer Funksignalausbreitung günstige Positionierung eines Transponders sowie eine gleichzeitig gute Ablesbarkeit einer zugehörigen Anzeigeeinheit ermöglicht, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen, durch ein Funkortungssystem mit den in Anspruch 11 angegebenen Merkmalen und durch einen Transponder mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren wird eine Position eines Transponders mittels mehrerer Basisstationen eines Funkortungssystems anhand von Funksignal-Empfangszeitdifferenzen bzw. anhand von Funksignal-Laufzeiten ermittelt. Dabei sind die Basisstationen jeweils an einer vorgegebenen Position angeordnet. Der Transponder wird an einer ausgewählten Stelle eines zu ortenden Objekts angeordnet. Außerdem wird im Transponder zumindest ein dem zu ortenden Objekt zugeordneter Identifikator gespeichert, der bei einer Ermittlung der Position des Transponders an die Basisstationen des Funkortungssystems übermittelt wird. Auf Basis des Identifikators werden dem zu ortenden Objekt zugeordnete objektbezogene Daten durch die Basisstationen des Funkortungssystems an den Transponder gesendet. Vorzugsweise werden durch die Basisstationen des Funkortungssystems fortlaufend aktualisierte objektbezogene Daten an den Transponder übermittelt.

Die Position des Transponders kann beispielsweise entsprechend Time Difference of Arrival (TDOA) ermittelt werden, wobei die Basisstationen des Funkortungssystems untereinander zeitsynchronisiert sind. Grundsätzlich kann die Position des Transponders auch entsprechend Two-way Ranging (TWR) ermittelt werden. Vorzugsweise ist das Funkortungssystem ein zumindest RFID-basiertes, UWB-basiertes bzw. 2,4 GHz ISM-Band-basiertes Real-time Locating System (RTLS).

Erfindungsgemäß ist der Transponder mit einem Kommunikationsmodul für ein Drahtlos-Kommunikationssystem ausgestattet und wird als Basisstation oder Master-Station des Drahtlos-Kommunikationssystems betrieben. Darüber hinaus ist zumindest eine mit einem Kommunikationsmodul ausgestattete, vom Transponder separierte Anzeigeeinheit vorgesehen, die sich als Teilnehmerstation oder Slave-Station des Drahtlos-Kommunikationssystems mit dem Transponder verbindet. Der Transponder übermittelt positionsbezogene Informationen und die von den Basisstationen des Funkortungssystems gesendeten objektbezogenen Daten an die Anzeigeeinheit, insbesondere über das Drahtlos-Kommunikationssystem. Die Anzeigeeinheit stellt die übermittelten positionsbezogenen Informationen und objektbezogenen Daten laufend aktualisiert dar.

Mit der vorliegenden Erfindung kann der Transponder für eine Übertragung von Funkortungssignalen optimal am zu ortenden Objekt positioniert werden. Demgegenüber kann die Anzeigeeinheit, insbesondere eine ePaper-Displayeinrichtung, durch ihre Abkopplung so angeordnet werden, dass für eine Bearbeitung des jeweiligen Objekts innerhalb einer Fertigungslinie relevante Informationen problemlos und korrekt durch Personen oder maschinelle Erfassungssysteme abgelesen werden können. Grundsätzlich können auch mehrere Anzeigeeinheiten mit einem Transponder gekoppelt werden, beispielsweise mittels eines Locating Managers, um eine stets einwandfreie Ablesbarkeit auch bei komplizierten Verwendungsbedingungen gewährleisten zu können. Außerdem können akkubetriebene Anzeigeeinheiten einfach und schnell durch Anzeigeeinheiten mit aufgeladenen Akkus ausgetauscht werden.

Entsprechend einer bevorzugten Ausgestaltung der vorliegenden Erfindung ist das Drahtlos-Kommunikationssystem ein Wi-Fi-Kommunikationssystem oder ein Bluetooth-Kommunikationssystem. Dabei können der Transponder und die Anzeigeeinheit beispielsweise über eine Wi-Fi Direct-Verbindung miteinander kommunizieren. Dagegen kommuniziert die Anzeigeeinheit vorteilhafterweise nur mittelbar bzw. indirekt, nämlich über den Transponder mit den Basisstationen des Funkortungssystems. Somit wird eine Kommunikation innerhalb des Funkortungssystems nicht nachteilig durch Anzeigeeinheiten beeinflusst.

Das erfindungsgemäße Funkortungssystem ist zur Durchführung eines Verfahrens entsprechend vorangehenden Ausführungen vorgesehen und umfasst zumindest einen mit einem Kommunikationsmodul für ein Drahtlos-Kommunikationssystem ausgestatteten Transponder, der an einer ausgewählten Stelle eines zu ortenden Objekts anordenbar und als Basisstation oder Master-Station des Drahtlos-Kommunikationssystems betreibbar ist. Außerdem ist zumindest eine mit einem Kommunikationsmodul ausgestattete, vom Transponder separierte Anzeigeeinheit vorgesehen, die als Teilnehmerstation oder Slave-Station des Drahtlos-Kommunikationssystems mit dem Transponder verbindbar ist. Darüber hinaus umfasst das Funkortungssystem mehrere jeweils an einer vorgegebenen Position anordenbare Basisstationen zur Erfassung einer Position des Transponders anhand von Funksignal-Empfangszeitdifferenzen bzw. anhand von Funksignal-Laufzeiten.

Der Transponder des erfindungsgemäßen Funkortungssystems ist dafür ausgestaltet und eingerichtet, zumindest einen dem zu ortenden Objekt zugeordneten Identifikator zu speichern und bei einer Ermittlung der Position des Transponders an die Basisstationen des Funkortungssystems zu übermitteln. Demgegenüber sind die Basisstationen des Funkortungssystems jeweils Transponder dafür ausgestaltet und eingerichtet, auf Basis des Identifikators dem zu ortenden Objekt zugeordnete objektbezogene Daten an den Transponder zu senden. Darüber hinaus ist der Transponder dafür ausgestaltet und eingerichtet, positionsbezogene Informationen und die von den Basisstationen des Funkortungssystems gesendeten objektbezogenen Daten an die Anzeigeeinheit zu übermitteln. Dementsprechend ist die Anzeigeeinheit dafür ausgestaltet und eingerichtet, die übermittelten positionsbezogenen Informationen und objektbezogenen Daten laufend aktualisiert darzustellen.

Der erfindungsgemäße Transponder ist zur Durchführung eines Verfahrens entsprechend vorangehenden Ausführungen vorgesehen und mit einem Kommunikationsmodul für ein Drahtlos-Kommunikationssystem ausgestattet. Außerdem ist der Transponder an einer ausgewählten Stelle eines zu ortenden Objekts anordenbar und als Basisstation oder Master-Station des Drahtlos-Kommunikationssystems betreibbar. Darüber hinaus ist der Transponder dafür ausgestaltet und eingerichtet, dass zumindest eine mit einem Kommunikationsmodul ausgestattete, vom Transponder separierte Anzeigeeinheit als Teilnehmerstation oder Slave-Station des Drahtlos-Kommunikationssystems mit dem Transponder verbunden wird.

Ferner ist der erfindungsgemäße Transponder dafür ausgestaltet und eingerichtet, dass mehrere jeweils an einer vorgegebenen Position angeordnete Basisstationen eine Position des Transponders anhand von Funksignal-Empfangszeitdifferenzen bzw. anhand von Funksignal-Laufzeiten erfassen. Zusätzlich ist der Transponder dafür ausgestaltet und eingerichtet, zumindest einen dem zu ortenden Objekt zugeordneten Identifikator zu speichern und bei einer Ermittlung der Position des Transponders an die Basisstationen des Funkortungssystems zu übermitteln. Schließlich ist der Transponder dafür ausgestaltet und eingerichtet, positionsbezogene Informationen und von den Basisstationen des Funkortungssystems gesendete objektbezogenen Daten, die dem zu ortenden Objekt auf Basis des Identifikators zugeordnet sind, an die Anzeigeeinheit zur laufend aktualisierten Darstellung zu übermitteln.

Die vorliegende Erfindung wird nachfolgend an einem Ausführungsbeispiel anhand der Zeichnung näher erläutert. Es zeigt
- Figur 1: ein Funkortungssystem für ein industrielles Automatisierungssystem mit mehreren Basisstationen, einem Transponder und einer mit dem Transponder gekoppelten, an einem zu ortenden Objekt angeordneten Anzeigeeinheit,
- Figur 2: ein Funkortungssystem mit mehreren Basisstationen, einem Transponder und einer portablen Anzeigeeinheit.

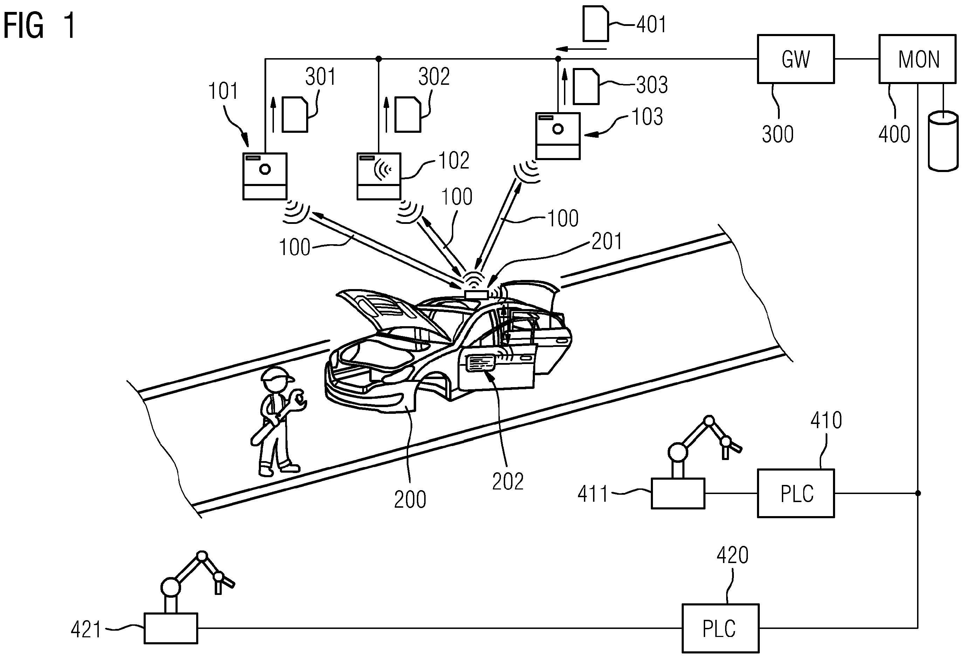

Das in Figur 1 dargestellte Funkortungssystem ist im vorliegenden Ausführungsbeispiel ein UWB- bzw. 2,4 GHz ISM-Band-basiertes Real-time Locating System (RTLS), das mehrere Basisstationen 101-103 umfasst, die jeweils an vorgegebenen bzw. bekannten Positionen angeordnet sind. Mittels der Basisstationen 101-103 wird anhand von Funksignal-Laufzeiten bzw. anhand von Funksignal-Empfangszeitdifferenzen eine Position eines RTLS-Transponders 201 erfasst, der an einer ausgewählten Stelle eines zu ortenden Objekts 200 angeordnet ist. Im vorliegenden Ausführungsbeispiel handelt es sich bei dem zu ortenden Objekt 200 um ein Fahrzeug innerhalb einer Fertigungslinie für Fahrzeuge. Für einen optimalen Austausch von Ortungssignalen 100 mit den Basisstationen wird der RTLS-Transponder 201 auf einem Dach einer Fahrzeugkarosserie angeordnet. Neben UWB- bzw. 2,4 GHz ISM-Band-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in den RTLS-Transponder 201 und in die Basisstationen 101-103 des Funkortungssystems integriert sein.

Im RTLS-Transponder 201 wird zumindest ein dem zu ortenden Objekt 200 zugeordneter Objektidentifikator gespeichert, der bei einer Ermittlung der Position des RTLS-Transponders 201 an die Basisstationen 101-103 des Funkortungssystems übermittelt wird. Auf diese Weise kann das zu ortende Objekt 200 überwacht werden, das beispielsweise in der Fertigungslinie durch Roboter 411, 421 transportiert und montiert wird. Die Roboter 411, 421 werden jeweils durch eine speicherprogrammierbare Steuerung 410, 420 gesteuert, die mit einer zentralen Überwachungs- und Steuerungseinheit 400 verbunden sind. Durch die Überwachungs- und Steuerungseinheit 400 können insbesondere die speicherprogrammierbaren Steuerungen 411, 421 und das Funkortungssystem projektiert bzw. überwacht werden. Die Basisstationen 101-103 sind mit einer als Gateway 300 ausgestalteten Auswertevorrichtung des Funkortungssystems verbunden. Vorzugsweise senden die Basisstationen 101-103 Datagramme 301-303, die erfasste Signallaufzeitinformationen, Signalempfangszeitinformationen, Signalstärkemesswerte von empfangenen Ortungssignalen 100 bzw. Objektidentifikatoren umfassen, zur Auswertung an das Gateway 300. Im Gateway 300

bzw. in der Überwachungs- und Steuerungseinheit 400 liegen hierfür insbesondere die Positionen der Basisstationen 301-303 des Funkortungssystems vor.

Im vorliegenden Ausführungsbeispiel wird die Position des RTLS-Transponders 201 entsprechend Time Difference of Arrival (TDOA) ermittelt. Hierfür sind die Basisstationen 101-103 untereinander zeitsynchronisiert. Alternativ hierzu kann die Position des RTLS-Transponders 201-203 bzw. eine jeweilige Entfernung des RTLS-Transponders 201 zu Basisstationen 101-103 entsprechend Two-way Ranging (TWR) ermittelt werden. Details zur Positionsermittlung mittels TDOA sind beispielsweise in Wikipedia unter Multilateration (https://en.wikipedia.org/wiki/ Multilateration) beschrieben.

Beispielsweise kann das Gateway 300 die Basisstationen 101-103 in einen TDOA-Betriebsmodus versetzen, falls zumindest 4 Basisstationen ein Ortungssignal vom RTLS-Transponder 201 mit erforderlicher Mindestsignalstärke empfangen haben. Dagegen kann das Gateway 300 die Basisstationen in einen TWR-Betriebsmodus versetzen, falls 3 Basisstationen das Ortungssignal vom RTLS-Transponder 201 mit erforderlicher Mindestsignalstärke empfangen haben. Zusätzlich kann das Gateway 300 anhand von Kenntnis über Nachbarschaftsbeziehungen zwischen den Basisstationen bzw. über die Positionen der Basisstationen über ein Umschalten zwischen dem TDOA- und dem TWR-Betriebsmodus entscheiden.

Das Gateway 300 des Funkortungssystems sendet die jeweils ermittelte Position des RTLS-Transponders 201 einschließlich des Objektidentifikators an die Überwachungs- und Steuerungseinheit 400. Beispielsweise kann die Überwachungs- und Steuerungseinheit 400 anhand der vom Gateway 300 gesendeten Position des RTLS-Transponders 201 dem RTLS-Transponder 201 in der Überwachungs- und Steuerungseinheit 400 zugeordnete Ortsinformationen validieren. Darüber hinaus werden durch die Basisstationen 101-103 des Funkortungssystems auf Basis des Objektidentifikators dem zu ortenden Objekt zugeordnete objektbezogene Daten 401 an den RTLS-Transponder 201 gesendet. Diese objektbezogenen Daten 401 werden vorteilhafterweise durch die Überwachungs- und Steuerungseinheit 400 bereitgestellt. Vorzugsweise werden durch die Basisstationen 101-103 des Funkortungssystems fortlaufend aktualisierte objektbezogene Daten 401 an den RTLS-Transponder 201 übermittelt.

Der RTLS-Transponder 201 ist mit einem Kommunikationsmodul für ein Drahtlos-Kommunikationssystem ausgestattet und wird als Basisstation oder Master-Station des Drahtlos-Kommunikationssystems betrieben. Das Drahtlos-Kommunikationssystem kann insbesondere ein Wi-Fi-Kommunikationssystem oder ein Bluetooth-Kommunikationssystem sein.

Zusätzlich ist zumindest eine mit einem Kommunikationsmodul ausgestattete, vom RTLS-Transponder 201 separierte Anzeigeeinheit 202 vorgesehen, die sich als Teilnehmerstation oder Slave-Station des Drahtlos-Kommunikationssystems mit dem RTLS-Transponder 201 verbindet. Die Anzeigeeinheit ist vorzugsweise als ePaper-Displayeinrichtung ausgestaltet und kommuniziert nur indirekt, und zwar über den RTLS-Transponder 201 mit den Basisstationen 101-103 des Funkortungssystems.

Bei dem in Figur 1 dargestellten Ausführungsbeispiel ist die Anzeigeeinheit 202 an einer Fahrzeugtür befestigt, damit in der Fertigungslinie tätige Personen auf der Anzeigeeinheit 202 dargestellte Informationen problemlos ablesen oder mittels Scannern erfassen können. Grundsätzlich könnte die Anzeigeeinheit 202 auch an anderen Stellen der Fahrzeugkarosserie angeordnet werden, an denen eine gute Sichtbarkeit für die in der Fertigungslinie tätigen Personen gegeben ist.

Der RTLS-Transponder 201 übermittelt positionsbezogene Informationen und die von den Basisstationen 101-103 des Funkortungssystems gesendeten objektbezogenen Daten 401 über das Drahtlos-Kommunikationssystem an die Anzeigeeinheit 202. Dabei kommunizieren der RTLS-Transponder 201 und die Anzeigeeinheit 202 vorzugsweise über eine Wi-Fi Direct-Verbindung miteinander. Die Anzeigeeinheit 202 stellt die übermittelten positionsbezogenen Informationen und objektbezogenen Daten laufend aktualisiert dar.

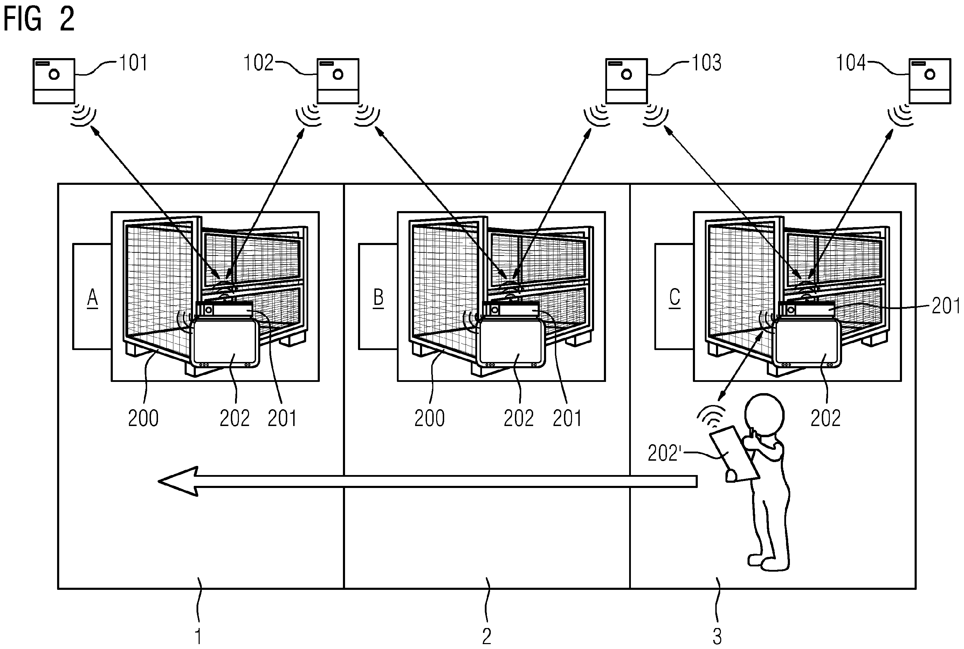

Bei dem in Figur 2 dargestellten Ausführungsbeispiel wird zusätzlich zu an den jeweils zu ortenden Objekten 200 befestigten Anzeigeeinheiten 202 eine portable Anzeigeeinheit 202' verwendet, die beispielsweise als Tablet ausgestaltet sein kann. Die zu ortenden Objekte 200 sind bei diesem Ausführungsbeispiel in mehreren Bereichen 1-3, insbesondere Lagerbereichen, angeordnete Container, die Material oder Produktionsgüter aufnehmen. An diesen Containern 200 sind jeweils RTLS-Transponder 201 befestigt, die wie schon zuvor beschrieben durch Basisstationen 101-104 eines Funkortungssystems lokalisiert werden können.

Durchläuft eine Person die Bereiche 1-3, so verbindet sich ihre portable Anzeigeeinheit 202` über eine Kommunikationsverbindung eines Drahtlos-Kommunikationssystems analog zu obigen Ausführungen mit dem RTLS-Transponder 201 des im jeweiligen Bereich 1-3 befindlichen Containers 200. Somit können positionsbezogene Informationen und objektbezogene Daten für den Container 200 im jeweiligen Bereich 1-3 auf der portable Anzeigeeinheit 202' zusätzlich zu einer Darstellung auf den an den Containern 200 befestigten Anzeigeeinheiten 202 anzeigt werden. Diese positionsbezogenen Informationen und objektbezogenen Daten umfassen im vorliegenden Ausführungsbeispiel insbesondere eine Angabe des jeweiligen Bereichs 1-3 und eine Liste eines jeweiligen Containerinhalts. Die am jeweiligen Container 200 befestigten Anzeigeeinheiten 202 können grundsätzlich auch über eine drahtgebundene Verbindung mit dem dortigen RTLS-Transponder 201 verbunden werden. Wesentlich ist, dass eine Kommunikation zwischen der portablen Anzeigeeinheit 202' und den RTLS-Transpondern über ein Drahtlos-Kommunikationssystem erfolgt, für das die RTLS-Transponder 201 als Basis- oder Master-Stationen betrieben werden.

## Patentansprüche

1. Verfahren zum Betrieb eines Funkortungssystems, bei dem
- eine Position eines Transponders (201) mittels mehrerer Basisstationen (101-103) des Funkortungssystems anhand von Funksignal-Empfangszeitdifferenzen und/oder anhand von Funksignal-Laufzeiten ermittelt wird, wobei die Basisstationen jeweils an einer vorgegebenen Position angeordnet sind,
- der Transponder an einer ausgewählten Stelle eines zu ortenden Objekts (200) angeordnet wird,
- im Transponder zumindest ein dem zu ortenden Objekt zugeordneter Identifikator gespeichert wird, der bei einer Ermittlung der Position des Transponders an die Basisstationen des Funkortungssystems übermittelt wird,
- auf Basis des Identifikators dem zu ortenden Objekt zugeordnete objektbezogene Daten (401) durch die Basisstationen des Funkortungssystems an den Transponder gesendet werden,
- der Transponder mit einem Kommunikationsmodul für ein Drahtlos-Kommunikationssystem ausgestattet ist und als Basisstation oder Master-Station des Drahtlos-Kommunikationssystems betrieben wird,
- zumindest eine mit einem Kommunikationsmodul ausgestattete, vom Transponder separierte Anzeigeeinheit (202) sich als Teilnehmerstation oder Slave-Station des Drahtlos-Kommunikationssystems mit dem Transponder verbindet,
- der Transponder positionsbezogene Informationen und die von den Basisstationen des Funkortungssystems gesendeten objektbezogenen Daten an die Anzeigeeinheit übermittelt,
- die Anzeigeeinheit die übermittelten positionsbezogenen Informationen und objektbezogenen Daten laufend aktualisiert darstellt.

2. Verfahren nach Anspruch 1,
bei dem die Position des Transponders entsprechend Time Difference of Arrival ermittelt wird und bei dem die Basisstationen des Funkortungssystems untereinander zeitsynchronisiert sind.

3. Verfahren nach einem der Ansprüche 1 oder 2,
bei dem die Position des Transponders entsprechend Two-way Ranging ermittelt wird.

4. Verfahren nach einem der Ansprüche 1 bis 3,
bei dem das Funkortungssystem ein zumindest RFID-basiertes, UWB-basiertes und/oder 2,4 GHz ISM-Band-basiertes Real-time Locating System ist.

5. Verfahren nach einem der Ansprüche 1 bis 4,
bei dem das Drahtlos-Kommunikationssystem ein Wi-Fi-Kommunikationssystem oder ein Bluetooth-Kommunikationssystem ist.

6. Verfahren nach Anspruch 5,
bei dem der Transponder und die Anzeigeeinheit über eine Wi-Fi Direct-Verbindung miteinander kommunizieren.

7. Verfahren nach einem der Ansprüche 1 bis 6,
bei dem der Transponder die positionsbezogenen Informationen und die objektbezogenen Daten über das Drahtlos-Kommunikationssystem an die Anzeigeeinheit übermittelt.

8. Verfahren nach einem der Ansprüche 1 bis 7,
bei dem durch die Basisstationen des Funkortungssystems fortlaufend aktualisierte objektbezogene Daten an den Transponder übermittelt werden.

9. Verfahren nach einem der Ansprüche 1 bis 8,
bei dem die Anzeigeeinheit eine ePaper-Displayeinrichtung ist.

10. Verfahren nach einem der Ansprüche 1 bis 9,
bei dem die Anzeigeeinheit nur indirekt, über den Transponder mit den Basisstationen des Funkortungssystems kommuniziert.

11. Funkortungssystem zur Durchführung eines Verfahrens nach einem der Ansprüche 1 bis 10 mit
- zumindest einem mit einem Kommunikationsmodul für ein Drahtlos-Kommunikationssystem ausgestatteten Transponder (201), der an einer ausgewählten Stelle eines zu ortenden Objekts (200) anordenbar und dafür ausgestaltet und eingerichtet ist, als Basisstation oder Master-Station des Drahtlos-Kommunikationssystems betrieben zu werden,
- zumindest einer mit einem Kommunikationsmodul ausgestatteten, vom Transponder separierten Anzeigeeinheit (202), die dafür ausgestaltet und eingerichtet ist, als Teilnehmerstation oder Slave-Station des Drahtlos-Kommunikationssystems mit dem Transponder verbunden zu werden,
- mehreren jeweils an einer vorgegebenen Position anordenbaren Basisstationen (101-103) zur Erfassung einer Position des Transponders anhand von Funksignal-Empfangszeitdifferenzen und/oder anhand von Funksignal-Laufzeiten,
- wobei der Transponder dafür ausgestaltet und eingerichtet ist, zumindest einen dem zu ortenden Objekt zugeordneten Identifikator zu speichern und bei einer Ermittlung der Position des Transponders an die Basisstationen des Funkortungssystems zu übermitteln,
- wobei die Basisstationen des Funkortungssystems jeweils dafür ausgestaltet und eingerichtet sind, auf Basis des Identifikators dem zu ortenden Objekt zugeordnete objektbezogene Daten (401) an den Transponder zu senden,
- wobei der Transponder ferner dafür ausgestaltet und eingerichtet ist, positionsbezogene Informationen und die von den Basisstationen des Funkortungssystems gesendeten objektbezogenen Daten an die Anzeigeeinheit zu übermitteln,
- wobei die Anzeigeeinheit dafür ausgestaltet und eingerichtet ist, die übermittelten positionsbezogenen Informationen und objektbezogenen Daten laufend aktualisiert darzustellen.

12. Transponder zur Durchführung eines Verfahrens einem der Ansprüche 1 bis 10, wobei der Transponder
- mit einem Kommunikationsmodul für ein Drahtlos-Kommunikationssystem ausgestattet ist,
- an einer ausgewählten Stelle eines zu ortenden Objekts anordenbar ist und dafür ausgestaltet und eingerichtet ist, als Basisstation oder Master-Station des Drahtlos-Kommunikationssystems betrieben zu werden,
- dafür ausgestaltet und eingerichtet ist, dass zumindest eine mit einem Kommunikationsmodul ausgestattete, vom Transponder separierte Anzeigeeinheit als Teilnehmerstation oder Slave-Station des Drahtlos-Kommunikationssystems mit dem Transponder verbunden wird,
- ferner dafür ausgestaltet und eingerichtet ist, dass mehrere jeweils an einer vorgegebenen Position angeordnete Basisstationen eine Position des Transponders anhand von Funksignal-Empfangszeitdifferenzen und/oder anhand von Funksignal-Laufzeiten erfassen,
- ferner dafür ausgestaltet und eingerichtet ist, zumindest einen dem zu ortenden Objekt zugeordneten Identifikator zu speichern und bei einer Ermittlung der Position des Transponders an die Basisstationen des Funkortungssystems zu übermitteln,
- ferner dafür ausgestaltet und eingerichtet ist, positionsbezogene Informationen und von den Basisstationen des Funkortungssystems gesendete objektbezogenen Daten, die dem zu ortenden Objekt auf Basis des Identifikators zugeordnet sind, an die Anzeigeeinheit zur laufend aktualisierten Darstellung zu übermitteln.

## Claims

1. Method for operating a radiolocation system, in which
- a position of a transponder (201) is determined by means of a plurality of base stations (101-103) of the radiolocation system on the basis of radio signal reception time differences and/or on the basis of radio signal propagation times, wherein the base stations are each arranged at a predefined position,
- the transponder is arranged at a selected point on an object (200) to be located,
- at least one identifier which is assigned to the object to be located and is transmitted to the base stations of the radiolocation system when determining the position of the transponder is stored in the transponder,
- on the basis of the identifier, object-related data (401) assigned to the object to be located are sent by the base stations of the radiolocation system to the transponder,
- the transponder is equipped with a communication module for a wireless communication system and is operated as a base station or master station of the wireless communication system,
- at least one display unit (202) which is equipped with a communication module and is separated from the transponder connects to the transponder as a subscriber station or slave station of the wireless communication system,
- the transponder transmits, to the display unit, position-related information and the object-related data sent by the base stations of the radiolocation system,
- the display unit displays the transmitted position-related information and object-related data in a continuously updated manner.

2. Method according to Claim 1,
in which the position of the transponder is determined according to the time difference of arrival, and in which the base stations of the radiolocation system are time-synchronized with one another.

3. Method according to either of Claims 1 and 2,
in which the position of the transponder is determined according to two-way ranging.

4. Method according to one of Claims 1 to 3,
in which the radiolocation system is an at least RFID-based, UWB-based and/or 2.4 GHz ISM-band-based real-time locating system.

5. Method according to one of Claims 1 to 4,
in which the wireless communication system is a Wi-Fi communication system or a Bluetooth communication system.

6. Method according to Claim 5,
in which the transponder and the display unit communicate with one another via a Wi-Fi direct connection.

7. Method according to one of Claims 1 to 6,
in which the transponder transmits the position-related information and the object-related data to the display unit via the wireless communication system.

8. Method according to one of Claims 1 to 7,
in which the base stations of the radiolocation system transmit continuously updated object-related data to the transponder.

9. Method according to one of Claims 1 to 8,
in which the display unit is an e-paper display device.

10. Method according to one of Claims 1 to 9,
in which the display unit communicates with the base stations of the radiolocation system only indirectly via the transponder.

11. Radiolocation system for carrying out a method according to one of Claims 1 to 10, having
- at least one transponder (201) which is equipped with a communication module for a wireless communication system, can be arranged at a selected point on an object (200) to be located and is configured and set up to be operated as a base station or master station of the wireless communication system,
- at least one display unit (202) which is equipped with a communication module, is separated from the transponder and is configured and set up to be connected to the transponder as a subscriber station or slave station of the wireless communication system,
- a plurality of base stations (101-103) which can each be arranged at a predefined position and are intended to detect a position of the transponder on the basis of radio signal reception time differences and/or on the basis of radio signal propagation times,
- wherein the transponder is configured and set up to store at least one identifier assigned to the object to be located and to transmit it to the base stations of the radiolocation system when determining the position of the transponder,
- wherein the base stations of the radiolocation system are each configured and set up to send object-related data (401) assigned to the object to be located to the transponder on the basis of the identifier,
- wherein the transponder is also configured and set up to transmit, to the display unit, position-related information and the object-related data sent by the base stations of the radiolocation system,
- wherein the display unit is configured and set up to display the transmitted position-related information and object-related data in a continuously updated manner.

12. Transponder for carrying out a method according to one of Claims 1 to 10, wherein the transponder
- is equipped with a communication module for a wireless communication system,
- can be arranged at a selected point on an object to be located and is configured and set up to be operated as a base station or master station of the wireless communication system,
- is configured and set up such that at least one display unit which is equipped with a communication module and is separated from the transponder is connected to the transponder as a subscriber station or slave station of the wireless communication system,
- is also configured and set up such that a plurality of base stations each arranged at a predefined position detect a position of the transponder on the basis of radio signal reception time differences and/or on the basis of radio signal propagation times,
- is also configured and set up to store at least one identifier assigned to the object to be located and to transmit it to the base stations of the radiolocation system when determining the position of the transponder,
- is also configured and set up to transmit, to the display unit, position-related information and object-related data, which are sent by the base stations of the radiolocation system and are assigned to the object to be located on the basis of the identifier, for continuously updated display.

## Revendications

1. Procédé pour faire fonctionner un système de localisation radio, dans lequel
- on détermine une position d'un transpondeur (201) au moyen de plusieurs stations (101 - 103) de base du système de localisation radio à l'aide de différences de temps de réception du signal radio et/ou à l'aide de temps de parcours du signal radio, dans lequel les stations de base sont disposées respectivement en une position donnée à l'avance,
- on met le transpondeur en un point sélectionné d'un objet (200) à localiser,
- on met en mémoire dans le transpondeur au moins un identifiant, qui est affecté à l'objet à localiser et que l'on transmet aux stations de base du système de localisation radio lors d'une détermination de la position du transpondeur,
- sur la base de l'identifiant, on envoie au transpondeur, par les stations de base du système de localisation radio, des données (401) se rapportant à l'objet affectées à l'objet à localiser,
- le transpondeur est équipé d'un module de communication pour un système de communication sans fil et on le fait fonctionner comme station de base ou station maître du système de communication sans fil,
- au moins une unité (202) d'affichage, équipée d'un module de communication et distincte du transpondeur, se relie au transpondeur comme station de participant ou station esclave du système de communication sans fil,
- le transpondeur transmet à l'unité d'affichage des informations se rapportant à la position et les données se rapportant à l'objet envoyées par les stations de base du système de localisation radio,
- l'unité d'affichage représente, d'une manière mise à jour en continu, les informations transmises se rapportant à la position et les données se rapportant à l'objet.

2. Procédé suivant la revendication 1,
dans lequel on détermine la position du transpondeur conformément à time différence of arrivai et dans lequel les stations de base du système de localisation radio sont synchronisées temporellement entre elles.

3. Procédé suivant l'une des revendications 1 ou 2,
dans lequel on détermine la position du transpondeur conformément à two-way ranging.

4. Procédé suivant l'une des revendications 1 à 3,
dans lequel le système de localisation radio est un système real-time locating reposant sur RFID, reposant sur UWB et/ou reposant sur la bande ISM 2,4 GHz.

5. Procédé suivant l'une des revendications 1 à 4,
dans lequel le système de communication sans fil est un système de communication Wi-Fi ou un système de communication Bluetooth.

6. Procédé suivant la revendication 5,
dans lequel le transpondeur et l'unité d'affichage communiquent entre eux par une liaison directe Wi-Fi.

7. Procédé suivant l'une des revendications 1 à 6,
dans lequel le transpondeur transmet les informations se rapportant à la position et les données se rapportant à l'objet à l'unité d'affichage par le système de communication sans fil.

8. Procédé suivant l'une des revendications 1 à 7,
dans lequel on transmet au transpondeur, par les stations de base du système de localisation radio, des données se rapportant à l'objet mises à jour en continu.

9. Procédé suivant l'une des revendications 1 à 8,
dans lequel l'unité d'affichage est un dispositif d'affichage epaper.

10. Procédé suivant l'une des revendications 1 à 9,
dans lequel l'unité d'affichage communique seulement, indirectement par le transpondeur, avec les stations de base du système de localisation radio.

11. Système de localisation radio pour effectuer un procédé suivant l'une des revendications 1 à 10 comprenant
- au moins un transpondeur (201), qui est équipé d'un module de communication pour un système de communication sans fil, qui peut être mis en un point sélectionné d'un objet (200) à localiser et qui est conformé et agencé pour fonctionner comme station de base ou station maître du système de communication sans fil,
- au moins une unité (202) d'affichage, qui est équipée d'un module de communication, qui est distincte du transpondeur et qui est conformée et agencée pour être reliée au transpondeur comme station de participant ou station esclave du système de communication sans fil,
- plusieurs stations (101 - 103) de base pouvant être disposées chacune en une position donnée à l'avance pour la détection d'une position du transpondeur à l'aide de différences de temps de réception du signal radio et/ou à l'aide de temps de parcours du signal radio,
- dans lequel le transpondeur est conformé et conçu pour mettre en mémoire au moins un identifiant affecté à l'objet à localise et pour, lors d'une détermination de la position du transpondeur, le transmettre aux stations de base du système de localisation radio,
- dans lequel les stations de base du système de localisation radio sont conformées et conçues chacune pour envoyer sur la base de l'identifiant au transpondeur des données (401) se rapportant à l'objet affectées à l'objet à localiser,
- dans lequel le transpondeur est en outre conformé et agencé pour transmettre à l'unité d'affichage des informations se rapportant à la position et les données se rapportant à l'objet envoyées par les stations de base du système de localisation radio,
- dans lequel l'unité d'affichage est conformée et agencée pour représenter, d'une manière mise à jour en continu, les informations se rapportant à la position et les données se rapportant à l'objet, qui sont transmises.

12. Transpondeur pour effectuer un procédé suivant l'une des revendications 1 à 10, dans lequel le transpondeur
- est équipé d'un module de communication pour un système de communication sans fil,
- peut être mis en un point sélectionné d'un objet à localiser et est équipé et agencé pour fonctionner comme station de base ou station maître du système de communication sans fil,
- est conformé et agencé, de manière à ce qu'au moins une unité d'affichage, équipée d'un module de communication et distincte du transpondeur, soit reliée au transpondeur comme station de participant ou station esclave du système de communication sans fil,
- est conformé et agencé en outre pour que plusieurs stations de base, disposées chacune dans une position donnée à l'avance, détectent une position du transpondeur à l'aide de différences de temps de réception du signal radio et/ou à l'aide du temps de parcours du signal radio,
- est conformé et agencé en outre pour mettre en mémoire au moins un identifiant affecté à l'objet à localiser et pour, à la détermination de la position du transpondeur, le transmettre aux stations de base du système de localisation radio,
- est conformé et agencé en outre pour transmettre à l'unité d'affichage, pour une représentation, mise à jour en continu, des informations se rapportant à la position et des données se rapportant à l'objet envoyées par les stations de base du système de localisation radio, qui sont affectées à l'objet à localiser sur la base de l'identifiant.
